# DEMANDE DE BREVET EUROPEEN

(11) **EP 2 199 966 A1**
(43) Date de publication de la demande: **23.06.2010**
(21) Numéro de dépôt: 09180248.8
(22) Date de dépôt: 21.12.2009
(51) Int. Cl.: G06Q 20/00

(54) **Procédé de sécurisation de transactions, dispositif de transaction, serveur bancaire, terminal mobile, et produits programmes d'ordinateur correspondants**

(30) Priorité: 22.12.2008 FR 0858969
(71) Demandeur: Compagnie Industrielle et Financière d'Ingénierie "Ingenico", 92200 Neuilly sur Seine (FR)
(72) Inventeur: Naccache, David, 75018 Paris (FR)
(74) Mandataire: Bioret, Ludovic

(57) **Abrégé**

L'invention concerne un procédé de sécurisation d'une transaction à l'aide d'une carte électronique.

Selon l'invention, ladite carte électronique est appairée à un terminal mobile, l'organisme bancaire en charge de la gestion des transactions impliquant ladite carte ayant enregistré au préalable un identifiant dudit terminal mobile parmi les données relatives au titulaire de ladite carte, et un tel procédé de sécurisation comprend les étapes suivantes :
- émission, par ledit terminal mobile, d'au moins un premier signal comprenant un message portant ledit identifiant ;
- réception, par au moins un dispositif de transaction à proximité dudit terminal mobile, dudit premier signal ;
- transmission, par ledit dispositif de transaction, d'un second signal comprenant au moins ledit message vers au moins un organisme bancaire distant ;
- affectation, par un serveur de contrôle dudit organisme bancaire, à une transaction impliquant ladite carte électronique, par un serveur de contrôle dudit organisme bancaire, d'une information représentative de la proximité entre ladite carte électronique et ledit terminal mobile, en fonction dudit second signal reçu par ledit organisme bancaire.

## Description

### 1. Domaine de l'invention

Le domaine de l'invention est celui des transactions effectuées par l'intermédiaire d'un dispositif de transaction, par exemple un terminal de paiement électronique ou un distributeur automatique de billets.

Plus précisément, l'invention concerne l'amélioration de la sécurisation et la traçabilité de telles transactions.

### 2. Art antérieur

Une technique classique de sécurisation de transaction consiste à authentifier la carte électronique impliquée dans la transaction à l'aide d'un code personnel connu du porteur de ladite carte, par exemple un code de 4 chiffres. Une telle technique n'est cependant pas complètement fiable, dans la mesure où ce code peut être découvert, par exemple par observation lors de la saisie du code au moment d'une transaction, ou par recherche à l'aide d'un programme, dans le but d'utiliser la carte volée à son porteur.

Pour pallier ces inconvénients, il existe des techniques permettant de renforcer la sécurité des transactions, en ajoutant notamment une phase d'authentification biométrique du porteur de la carte, par exemple par saisie d'empreintes digitales, par reconnaissance vocale, etc.

Cependant, ces techniques sont coûteuses à mettre en place, du fait de la mise en oeuvre d'un capteur biométrique, moins conviviales pour l'utilisateur, qui doit fournir une empreinte biométrique, et rendent les transactions plus complexes et surtout plus longues.

### 3. Objectifs de l'invention

L'invention a notamment pour objectif de pallier ces inconvénients de l'art antérieur.

Plus précisément, un objectif de l'invention, selon au moins un mode de réalisation, est de fournir une technique permettant de renforcer la sécurisation et l'authentification de transactions.

Notamment, l'invention a pour objectif de fournir une telle technique qui ne nécessite pas d'opération ni de manipulation supplémentaire de la part de l'utilisateur, notamment lors de la transaction.

Un autre objectif de l'invention est de fournir une telle technique, qui ne soit ni contraignante, ni impérative pour la validation d'une transaction.

### 4. Exposé de l'invention

L'invention propose une solution nouvelle qui ne présente pas l'ensemble de ces inconvénients de l'art antérieur, sous la forme d'un procédé de sécurisation d'une transaction à l'aide d'une carte électronique.

Selon l'invention, ladite carte électronique est appairée à au moins un terminal mobile, l'organisme bancaire en charge de la gestion des transactions impliquant ladite carte ayant enregistré au préalable un identifiant dudit terminal mobile parmi les données relatives au titulaire de ladite carte, et un tel procédé de sécurisation comprend les étapes suivantes :
- émission, par ledit terminal mobile, d'au moins un premier signal comprenant un message portant ledit identifiant ;
- réception, par au moins un dispositif de transaction à proximité dudit terminal mobile, dudit premier signal ;
- transmission, par ledit dispositif de transaction, d'un second signal comprenant au moins ledit message vers au moins un organisme bancaire distant ;
- affectation, par un serveur de contrôle dudit organisme bancaire, à une transaction impliquant ladite carte électronique, d'une information représentative de la proximité entre ladite carte électronique et ledit terminal mobile, en fonction dudit second signal reçu par ledit organisme bancaire.

Ainsi, l'invention repose sur une approche nouvelle et inventive de la sécurisation de transactions, qui utilise la proximité entre un terminal mobile, typiquement un téléphone portable, d'un porteur de carte électronique et un dispositif de transaction pour ajouter un facteur supplémentaire de sécurisation de la transaction.

En effet, si le terminal mobile du porteur de la carte électronique impliquée dans la transaction se trouve à proximité du dispositif de transaction pendant la transaction, ou dans un laps de temps court avant ou après la transaction, il est probable que la transaction soit effectivement effectuée par le porteur de la carte.

Au contraire, dans le cas où une carte bancaire a été volée et est utilisée par le voleur, le terminal mobile du porteur de la carte ne se trouve généralement pas à proximité du dispositif de transaction, et la transaction peut alors être marquée comme « suspecte ».

Selon un mode de réalisation de l'invention, le procédé de sécurisation comprend les étapes suivantes :
- détermination d'une distance entre une position dudit terminal mobile et ledit dispositif de transaction, à l'aide de ladite information représentative de la proximité entre ladite carte électronique et ledit terminal mobile ;
- refus de ladite transaction et/ou émission d'une alerte si ladite distance est supérieure à un seuil prédéterminé.

Ainsi, si le serveur de contrôle de l'organisme bancaire détermine que le terminal mobile du porteur de la carte impliquée dans la transaction n'était pas dans une zone de proximité prédéterminée du dispositif de transaction, ou était au contraire dans une zone très éloignée du dispositif de transaction, l'organisme bancaire peut émettre une alerte vers le porteur de la carte, par exemple un appel téléphonique pour demander confirmation de la validité de la transaction.

En particulier, ledit seuil prédéterminé est fonction du temps écoulé depuis la détermination de ladite information représentative de la proximité.

En effet, la distance acceptable peut être variable, en fonction du moment où l'information de proximité est déterminée, par rapport au moment de la transaction.

Par exemple, si l'organisme bancaire a reçu un signal d'un dispositif de transaction indiquant la présence du téléphone mobile d'un utilisateur à un endroit X, et qu'une transaction a lieu 30 minutes plus tard, dans un endroit Y distant de deux kilomètres, le serveur de contrôle de l'organisme bancaire doit tenir compte du temps écoulé (soit 30 minutes) pour déterminer le seuil à appliquer. En effet, en 30 minutes, l'utilisateur peut avoir parcouru les 2 kilomètres.

De plus, si la transaction a lieu quelques heures après la réception du signal par l'organisme bancaire, le serveur de contrôle peut juger que l'information de proximité qu'il a déterminée est périmée, au vu du temps écoulé.

De plus, à chaque fois que le terminal mobile du porteur de la carte se trouve à proximité d'un dispositif de transaction mettant en oeuvre l'invention, celui-ci transmet au serveur de l'organisme bancaire un signal permettant de localiser le terminal mobile. Le serveur de l'organisme bancaire, quant à lui, détermine une nouvelle information de localisation du terminal mobile, et met à jour l'information courante, de manière à pouvoir à tout moment déterminer une information représentative de la proximité la plus récente possible.

Selon une caractéristique particulière de l'invention, ledit message comprend au moins une information de référence bancaire et au moins une information d'adressage désignant ledit organisme bancaire.

Ainsi, le message transmis par le terminal mobile contient non seulement un identifiant de ce terminal, de façon à ce que le dispositif puisse l'identifier (pour lui répondre, ou pour transmettre cette information à l'organisme bancaire), mais aussi des informations représentatives du compte bancaire du porteur du terminal et de la carte appairée, et de l'organisme bancaire vers lequel le dispositif de transaction transmettra le second signal.

Par exemple, le message peut contenir un numéro de compte bancaire, ou un numéro de carte électronique associée à un compte bancaire, et un numéro de téléphone ou une adresse email de l'organisme bancaire en charge de la gestion de ce compte bancaire.

De cette manière, le dispositif de transaction connaît le destinataire (l'organisme bancaire) du signal qu'il émet pour indiquer une localisation du terminal mobile qui s'est au préalable identifié auprès de lui.

Selon un mode de réalisation de l'invention, ledit premier signal est transmis selon une technique de communication appartenant au groupe comprenant :
- la technologie « Bluetooth » ;
- la technologie « Wi-Fi » ;
- la technologie « RFID » ;
- la technologie « NFC » (« Near Field Communication » en anglais, pour « communication en champ proche ») ;
- la technologie infrarouge.

Ainsi, selon différents modes de réalisation de l'invention, la communication entre le dispositif de transaction et le terminal mobile est mise en oeuvre via différentes technologies, variant par exemple selon le type de terminal mobile impliqué.

L'invention concerne également un dispositif de transaction apte à mettre en oeuvre une transaction à l'aide d'une carte électronique.

Selon l'invention, ladite carte électronique est appairée à au moins un terminal mobile, l'organisme bancaire en charge de la gestion des transactions impliquant ladite carte ayant enregistré au préalable un identifiant dudit terminal mobile parmi les données relatives au titulaire de ladite carte, et ledit dispositif comprend :
- des moyens de réception, en provenance dudit terminal mobile, d'au moins un premier signal comprenant un message portant ledit identifiant ;
- des moyens de transmission d'un second signal comprenant au moins ledit message vers au moins un organisme bancaire.

Un tel dispositif de transaction est notamment apte à mettre en oeuvre les étapes du procédé de sécurisation tel que décrit précédemment. Un tel dispositif est par exemple un terminal de paiement électronique, ou un distributeur automatique de billets.

Un autre aspect de l'invention concerne un serveur bancaire en charge de la gestion de transaction impliquant une carte électronique, **caractérisé en ce que** ladite carte électronique est appairée à au moins un terminal mobile, comprenant :
- des moyens d'enregistrement d'un identifiant dudit terminal mobile parmi les données relatives au titulaire de ladite carte ;
- des moyens de réception, en provenance d'un dispositif de transaction, d'au moins un signal comprenant un message portant ledit identifiant ;
- des moyens de détermination, lors d'une transaction impliquant ladite carte électronique, d'une information représentative de la proximité entre ladite carte électronique et ledit terminal mobile.

Un tel serveur bancaire est notamment apte à mettre en oeuvre les étapes du procédé de sécurisation tel que décrit précédemment.

L'invention concerne encore un terminal mobile comprenant des moyens d'émission, à destination d'au moins un dispositif de transaction, d'au moins un signal comprenant un message portant un identifiant.

Un tel terminal mobile est notamment apte à mettre en oeuvre les étapes du procédé de sécurisation tel que décrit précédemment. Un tel terminal est par exemple un téléphone portable, ou un PDA.

Enfin, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de sécurisation décrit précédemment, lorsqu'il est exécuté sur un dispositif de transaction.

L'invention concerne également un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de sécurisation décrit précédemment, lorsqu'il est exécuté sur un terminal mobile.

Enfin, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de sécurisation décrit précédemment, lorsqu'il est exécuté sur un serveur bancaire.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente un exemple de système pour la mise en oeuvre de l'invention selon un mode de réalisation ;
- la figure 2 illustre les principales étapes du procédé de sécurisation selon un premier mode de réalisation de l'invention, dans un système tel qu'illustré en figure 1 ;
- la figure 3 présente les principales étapes d'une transaction selon un deuxième mode de réalisation de l'invention ;
- la figure 4 présente les principales étapes d'une transaction selon un troisième mode de réalisation de l'invention.

### 6. Description d'un mode de réalisation de l'invention

### 6.1 Principe général

Le principe général de l'invention repose sur la localisation d'un terminal mobile associé au porteur d'une carte électronique impliquée dans des transactions bancaires, de façon à évaluer la proximité entre le porteur de la carte, via son terminal mobile, et la carte elle-même, au moment d'une transaction.

Cette information de proximité est déterminée par le serveur de l'organisme bancaire en charge de la gestion des transactions impliquant la carte électronique en question, et permet d'ajouter un facteur supplémentaire de sécurisation de ces transactions.

En effet, une distance importante entre le porteur de la carte et la carte, au moment d'une transaction, peut alerter le serveur bancaire et permettre de mettre en oeuvre des actions de vérification supplémentaires de la transaction (appel du porteur de la carte avant validation de la transaction, émission d'une alarme bloquant la transaction au niveau du dispositif de transaction, etc).

### 6.2 Description d'un premier mode de réalisation

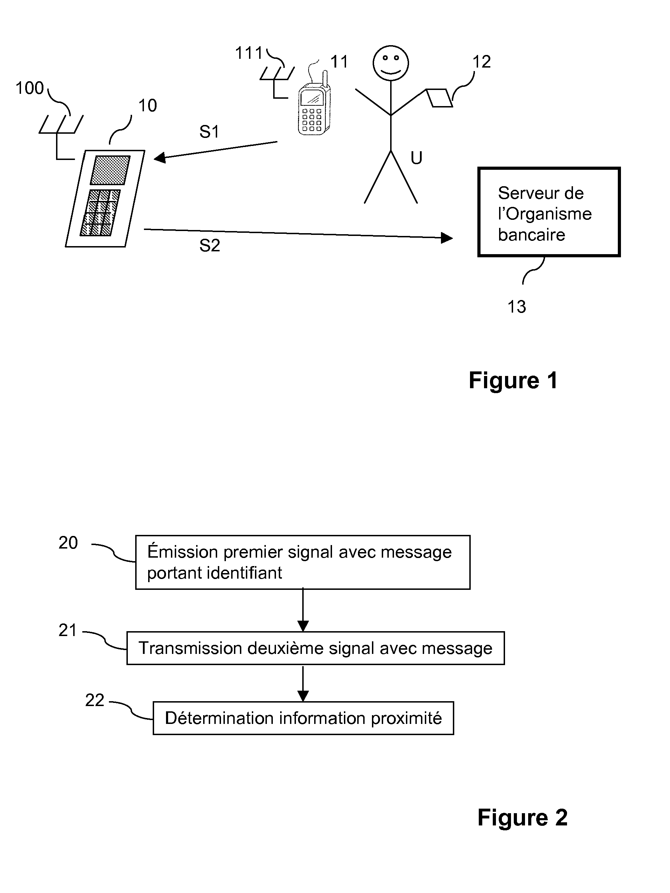

On présente, en relation avec la figure 1, un exemple de système pour la mise en oeuvre de l'invention, selon un premier mode de réalisation.

On considère un dispositif de transaction 10, par exemple un terminal de paiement électronique, près duquel se trouve un utilisateur U, porteur d'un terminal mobile 11, comprenant au moins une antenne d'émission 111, et d'une carte électronique 12.

Le compte bancaire de cet utilisateur U, et notamment les transactions effectuées via la carte électronique 12, est géré par un organisme bancaire, disposant d'un serveur 13 stockant les informations relatives aux transactions, encore appelé serveur de contrôle.

Selon ce mode de réalisation de l'invention, le dispositif de transaction 10 est apte à communiquer avec le terminal mobile 11 de l'utilisateur U, par exemple un téléphone mobile, et notamment à recevoir et traiter un signal S1 émis par celui-ci lorsque l'utilisateur U passe à proximité.

Le dispositif de transaction 10 est également apte, selon ce mode de réalisation, à émettre un deuxième signal S2 à destination du serveur 13 de l'organisme bancaire, après réception du signal S1.

On présente maintenant, en relation avec la figure 2, les principales étapes du procédé de sécurisation selon ce premier mode de réalisation de l'invention, mis en oeuvre dans un système tel que décrit précédemment en relation avec la figure 1.

Au moment du passage de l'utilisateur U à proximité du dispositif de transaction 10, le terminal mobile 11 de l'utilisateur U émet, lors d'une étape 20, un premier signal S1, comprenant un message portant notamment un identifiant du terminal mobile 11. Par exemple, cet identifiant peut être un numéro d'appel permettant d'identifier le terminal mobile, ou un numéro de série, de carte mémoire, etc.

Ce signal S1 est reçu et traité par le dispositif de transaction 10, qui émet ensuite, lors d'une étape 21, un deuxième signal S2, comprenant un message portant l'identifiant du terminal mobile 11, à destination du serveur 13 de l'organisme bancaire.

Selon ce mode de réalisation, le serveur 13 de l'organisme bancaire reçoit et traite ce signal S2, de façon à en extraire des informations permettant de localiser, à un instant donné, le terminal mobile 11 de l'utilisateur U porteur de la carte 12.

Lors d'une étape 23, au moment d'une transaction (ou après une transaction selon le mode de réalisation de l'invention), le serveur de contrôle 13 détermine, à l'aide des informations classiques de transaction et des informations extraites du signal S2, une information de proximité entre le porteur U de la carte 12 et la carte 12 elle-même, au moment de la transaction. Cette information de proximité permet par exemple d'alerter le porteur de la carte lorsqu'une transaction est suspecte du fait d'une grande distance séparant le terminal mobile du porteur U de la carte 12, au moment de la transaction.

### 6.3 Description d'un deuxième mode de réalisation

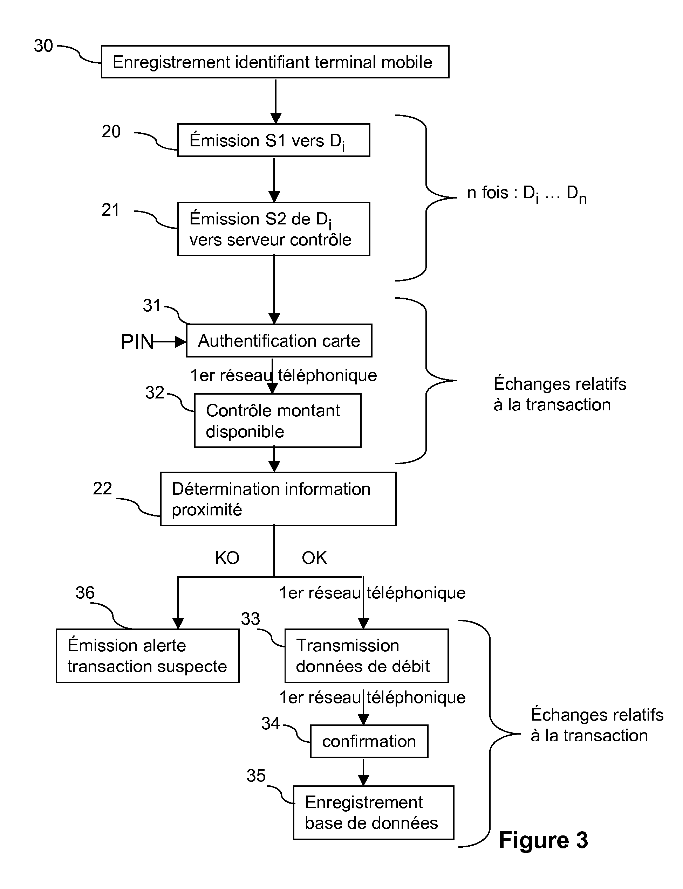

On présente maintenant, en relation avec la figure 3, les principales étapes du procédé de sécurisation d'une transaction selon un deuxième mode de réalisation de l'invention, ainsi que les étapes relatives à la transaction elle-même.

On considère, comme illustré en figure 1, un utilisateur U, porteur d'une carte électronique 12 et d'un téléphone mobile 11. Les transactions impliquant la carte électronique 12 sont gérées par un serveur 13 d'un organisme bancaire.

Le terminal mobile 11 de l'utilisateur U est apte à mettre en oeuvre le procédé selon ce mode de réalisation de l'invention, et un identifiant ID de ce terminal mobile est enregistré au préalable, lors d'une étape 30, auprès du serveur 13, en association avec des informations relatives à la carte électronique 12.

Par exemple, un numéro d'appel, ou un numéro de série, ou encore un code d'identification, correspondant au terminal mobile 11, est enregistré par le serveur 13 et mis en relation avec les informations relatives à la carte électronique, telles que le numéro de compte auquel elle est associée, son code d'identification, les coordonnées du titulaire, etc.

De plus, on considère qu'un nombre n de dispositifs de transaction Dᵢ sont aptes à mettre en oeuvre le procédé selon ce mode de réalisation de l'invention, et sont répartis dans une pluralité de magasins (par exemple des terminaux de paiement électronique), restaurants (par exemple des terminaux de paiement électronique), galeries marchandes (par exemple des distributeurs automatiques de billets), etc.

Ainsi, à chaque fois que le porteur du terminal mobile 11, préalablement enregistré auprès du serveur bancaire, se trouve à proximité d'un de ces dispositifs Dᵢ, il émet un signal S1 vers ce dispositif Dᵢ (étape 20).

En effet, selon ce mode de réalisation, le terminal mobile 11 détecte un dispositif Dᵢ à proximité et lui envoie le signal S1.

Selon une variante de réalisation, c'est le dispositif Dᵢ qui détecte le terminal mobile 11, lui envoie un message sollicitant une réponse comprenant un identifiant. Le terminal mobile émet alors le signal S1 en réponse à cette sollicitation du dispositif de transmission Dᵢ.

Ce signal S1 peut être émis via différentes technologies de communication à courte portée, comme par exemple le « Bluetooth », le « Wi-Fi », le « RFID », le « NFC » (« Near Field Communication » en anglais, pour « communication en champ proche »), ou la technologie infrarouge.

Ce premier signal S1 comprend un message portant notamment l'identifiant ID du terminal mobile 11. Ce signal S1 peut également comprendre des informations permettant d'identifier l'organisme bancaire, et plus particulièrement le serveur de contrôle 13, en vue de l'émission ultérieure d'un signal du dispositif Dᵢ vers ce serveur.

Par exemple, le message du signal S1 peut également porter une adresse email pour accéder au serveur de contrôle 13, ou bien une URL pour transmettre des informations vers le serveur, etc.

Le dispositif Dᵢ reçoit et traite ce signal, et émet ensuite, lors d'une étape 21, un signal S2, à destination du serveur de contrôle 13. Ce signal S2 comprend un message portant également l'identifiant ID. De plus, ce signal S2 comprend également des informations d'identification du dispositif de transaction Dᵢ, notamment pour permettre de localiser le terminal mobile 11, ainsi que des informations d'horodatage permettant de déterminer l'heure de la localisation du terminal mobile 11.

Ce signal S2 peut être émis sous la forme d'un SMS, d'un appel téléphonique, ou encore d'un email.

Ce signal S2 est reçu et traité par le serveur de contrôle 13 de l'organisme bancaire. Par exemple, le serveur enregistre le message compris dans le signal S2, pour traitement ultérieur, ou en extrait directement les informations utiles, afin de les enregistrer pour utilisation ultérieure. Les informations utiles sont par exemple l'identifiant ID du terminal mobile 11, les informations d'identification du dispositif Dᵢ, l'heure de la localisation, etc.

Lorsque le serveur de contrôle reçoit successivement plusieurs signaux relatifs à la localisation du même terminal mobile 11, c'est-à-dire lorsque les étapes décrites ci-dessus sont mises en oeuvre pour différents dispositifs de transactions Dᵢ, le serveur de contrôle met à jour les informations correspondantes. Par exemple, il met à jour l'information d'identification du dispositif Dᵢ, ainsi que l'heure de la localisation associée. De cette manière, le serveur de contrôle conserve l'information de localisation la plus récente, pour un terminal mobile donné.

Lorsque la carte électronique 12 est impliquée dans une transaction, par exemple avec un dispositif de transaction Dₘ, les échanges relatifs à cette transaction sont classiquement les suivants :
- une étape 31 d'authentification de la carte 12 impliquée dans la transaction, à l'aide d'un code personnel d'identification PIN fourni par le porteur de la carte. Les informations concernant la carte et le code d'identification sont transmises via un premier réseau téléphonique au serveur de l'organisme bancaire 13 ;
- une étape 32 de vérification, par l'organisme bancaire 13, des conditions de réalisation de la transaction, à savoir par exemple le montant disponible sur le compte du client identifié au préalable. Le résultat de la vérification est transmis au dispositif de transaction Dₘ, via le premier réseau téléphonique ;
- une étape 33 de transmission des données de débit, par le dispositif de transaction Dₘ au serveur de l'organisme bancaire 13, toujours via le premier réseau téléphonique ;
- une étape 34 de confirmation de la transaction ;
- une étape 35 d'enregistrement des données relatives à la transmission, dans une base de données du serveur bancaire 13.

On considère ici que le dispositif de transaction Dₘ n'est pas apte à mettre en oeuvre le procédé de sécurisation selon l'invention. Par conséquent, il ne transmet pas de signal S2, à destination du serveur de contrôle de l'organisme bancaire, pour localiser le terminal de mobile 11 du porteur de la carte électronique 12, au moment de la transaction.

On considère également que le procédé de sécurisation est mis en oeuvre au moment de la transaction, par le serveur de contrôle 13 de l'organisme bancaire, afin de valider cette transaction, ou d'émettre une alerte, par un appel vers le terminal mobile 11 du porteur U de la carte 12.

Par exemple, l'étape 22 de détermination d'une information de proximité entre le terminal mobile du porteur de la carte et la carte elle-même, peut être mise en oeuvre après l'étape 32 classique de vérification des conditions de réalisation de la transaction.

Ainsi, au moment où le serveur prend connaissance d'une transaction impliquant la carte 12, il détermine, à partir des informations stockées relatives à la carte 12, et des dernières informations de localisation reçues en provenance d'un dispositif de transaction Dᵢ, une information de proximité. Par exemple, une information représentative de la distance entre la localisation la plus récente du terminal mobile 11 et le dispositif de transaction Dₘ est calculée par le serveur.

Cette distance est comparée à un seuil prédéterminé, de façon à décider si la transaction est « suspecte » ou non. Cette comparaison tient compte également de l'heure de la dernière localisation du terminal mobile 11 et de l'heure de la transaction, afin de pouvoir déterminer si le porteur du terminal mobile 11 a eu potentiellement le temps de parcourir cette distance.

Par exemple, si la distance calculée est supérieure à ce seuil, on en déduit que le terminal mobile, supposé porté par le porteur de la carte, ne se trouve pas à proximité du dispositif de transaction Dₘ. Il se peut alors que le porteur et titulaire de la carte n'ait pas son terminal mobile sur lui. Il se peut par contre que le porteur de la carte ne soit pas le titulaire de la carte (et donc pas le porteur du terminal mobile 11) mais une personne ayant volé cette carte et cherchant à l'utiliser.

Dans le cas où la distance est supérieure au seuil prédéterminé, la transaction n'est pas validée et une alerte est émise, lors de l'étape 36. Cette alerte consiste par exemple à joindre le terminal mobile 11, de façon à s'assurer que la transaction est bien effectuée par le titulaire de la carte et porteur du terminal mobile.

Dans le cas où la distance est inférieure au seuil, la transaction est validée et les étapes suivantes (33 à 35) sont mises en oeuvre.

Selon une variante de ce mode de réalisation, on considère que le dispositif de transaction Dₘ est apte à mettre en oeuvre le procédé de sécurisation selon l'invention. Au moment de la transaction, ou un peu avant, si le terminal mobile 11 du porteur de la carte se trouve à proximité du dispositif de transaction Dₘ, alors celui-ci reçoit un premier signal S1, en provenance du terminal mobile 11. Le dispositif de transaction Dₘ émet ensuite un deuxième signal S2, à destination du serveur de contrôle 13, afin de transmettre des informations de localisation du terminal mobile 11, au moment de la transaction.

Le serveur de contrôle 13 détermine alors l'information de proximité avec des informations (celles relatives à la transaction et celles extraites du message S2) provenant du même dispositif de transaction Dₘ, et peut donc en conclure que le terminal mobile 11 se trouve bien à proximité du dispositif de transaction Dₘ au moment de la transaction.

Par contre, si la carte électronique a été volée et que le porteur de la carte n'est pas en possession du terminal mobile 11 du titulaire de la carte, le dispositif de transaction Dₘ n'émet pas de signal S2 vers le serveur de contrôle 13, qui utilise alors les informations stockées, si elles existent et sont valides, de dernière localisation du terminal mobile 11 pour déterminer l'information de proximité.

Selon encore une variante, le serveur de contrôle peut considérer la transaction comme suspecte dès lors qu'il n'a pas reçu, avant ou pendant la transaction, d'informations de localisation du dispositif de transaction Dₘ, sachant que celui est apte à mettre en oeuvre l'invention.

### 6.4 Description d'un troisième mode de réalisation

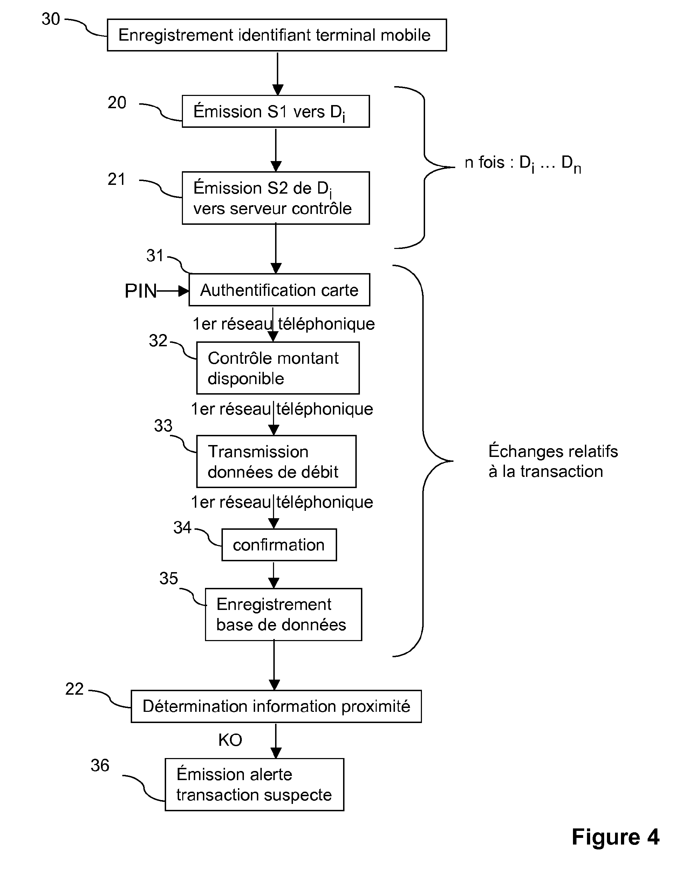

On présente maintenant, en relation avec la figure 4, les principales étapes du procédé de sécurisation d'une transaction selon un troisième mode de réalisation de l'invention, ainsi que les étapes relatives à la transaction elle-même.

Ce mode de réalisation est quasiment identique à celui décrit en relation avec la figure 3 (les étapes de ce mode de réalisation ne sont donc pas décrites à nouveau), à l'exception de l'étape 22 de détermination de l'information de proximité, qui est effectuée après la transaction, et non pendant.

Ainsi, la transaction a lieu de façon classique, et le serveur de contrôle met en oeuvre l'étape 22 a posteriori, par exemple chaque soir pour contrôler les transactions effectuées dans la journée, et l'étape 36 d'alerte, si nécessaire.

Ce mode de réalisation permet de ne pas allonger la durée de la transaction, avec une vérification supplémentaire, mais permet quand même de détecter des transactions « suspectes » et d'en alerter le titulaire de la carte impliquée.

L'alerte peut alors prendre une forme différente d'un appel téléphonique, comme par exemple un email de haute importance, ou un sms.

## Revendications

1. Procédé de sécurisation d'une transaction à l'aide d'une carte électronique,
**caractérisé en ce que** ladite carte électronique est appairée à au moins un terminal mobile, l'organisme bancaire en charge de la gestion des transactions impliquant ladite carte ayant enregistré au préalable un identifiant dudit terminal mobile parmi les données relatives au titulaire de ladite carte,
et **en ce qu'**il comprend les étapes suivantes :
- émission, par ledit terminal mobile, d'au moins un premier signal comprenant un message portant ledit identifiant ;
- réception, par au moins un dispositif de transaction à proximité dudit terminal mobile, dudit premier signal ;
- transmission, par ledit dispositif de transaction, d'un second signal comprenant au moins ledit message vers au moins un organisme bancaire distant ;
- affectation, par un serveur de contrôle dudit organisme bancaire, à une transaction impliquant ladite carte électronique, d'une information représentative de la proximité entre ladite carte électronique et ledit terminal mobile, en fonction dudit second signal reçu par ledit organisme bancaire.

2. Procédé de sécurisation d'une transaction selon la revendication 1,
**caractérisé en ce qu'**il comprend les étapes suivantes :
- détermination d'une distance entre une position dudit terminal mobile et ledit dispositif de transaction, à l'aide de ladite information représentative de la proximité entre ladite carte électronique et ledit terminal mobile ;
- refus de ladite transaction et/ou émission d'une alerte si ladite distance est supérieure à un seuil prédéterminé.

3. Procédé de sécurisation d'une transaction selon l'une quelconque des revendications 1 et 2, **caractérisé en ce que** ledit seuil prédéterminé est fonction du temps écoulé depuis la détermination de ladite information représentative de la proximité.

4. Procédé de sécurisation d'une transaction selon l'une quelconque des revendications 1 à 3, **caractérisé en ce que** ledit message comprend au moins une information de référence bancaire et au moins une information d'adressage désignant ledit organisme bancaire.

5. Procédé de sécurisation d'une transaction selon l'une quelconque des revendications 1 à 4, **caractérisé en ce que** ledit premier signal est transmis selon une technique de communication appartenant au groupe comprenant :
- la technologie « Bluetooth » ;
- la technologie « Wi-Fi » ;
- la technologie « RFID » ;
- la technologie « NFC » (« Near Field Communication » en anglais, pour « communication en champ proche ») ;
- la technologie infrarouge.

6. Dispositif de transaction apte à mettre en oeuvre une transaction à l'aide d'une carte électronique,
**caractérisé en ce que** ladite carte électronique est appairée à au moins un terminal mobile, l'organisme bancaire en charge de la gestion des transactions impliquant ladite carte ayant enregistré au préalable un identifiant dudit terminal mobile parmi les données relatives au titulaire de ladite carte, et **en ce qu'**il comprend :
- des moyens de réception, en provenance dudit terminal mobile, d'au moins un premier signal comprenant un message portant ledit identifiant ;
- des moyens de transmission d'un second signal comprenant au moins ledit message vers au moins un organisme bancaire.

7. Serveur bancaire en charge de la gestion de transaction impliquant une carte électronique, **caractérisé en ce que** ladite carte électronique est appairée à au moins un terminal mobile, et **en ce qu'**il comprend :
- des moyens d'enregistrement d'un identifiant dudit terminal mobile parmi les données relatives au titulaire de ladite carte ;
- des moyens de réception, en provenance d'un dispositif de transaction, d'au moins un signal comprenant un message portant ledit identifiant ;
- des moyens de détermination, lors d'une transaction impliquant ladite carte électronique, d'une information représentative de la proximité entre ladite carte électronique et ledit terminal mobile.

8. Terminal mobile, **caractérisé en ce qu'**il comprend des moyens d'émission, à destination d'au moins un dispositif de transaction, d'au moins un signal comprenant un message portant un identifiant.

9. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de sécurisation selon l'une au moins des revendications 1 à 5, lorsqu'il est exécuté sur un dispositif de transaction.

10. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de sécurisation selon l'une au moins des revendications 1 à 5, lorsqu'il est exécuté sur un terminal mobile.

11. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de sécurisation selon l'une au moins des revendications 1 à 5, lorsqu'il est exécuté sur un serveur bancaire.
